# EUROPEAN PATENT SPECIFICATION

(11) **EP 2 969 764 B1**
(45) Date of publication and mention of the grant of the patent: **29.11.2017**
(21) Application number: 14777416.0
(22) Date of filing: 14.03.2014
(51) Int. Cl.: B64D 33/02

(54) **INTERCHANGEABLE INLET PROTECTION SYSTEMS FOR AIR INTAKES OF AIRCRAFT ENGINES AND RELATED METHODS**
AUSWECHSELBARES EINLASSSCHUTZSYSTEME FÜR LUFTEINLASS VON FLUGTRIEBWERKEN UND ZUGEHÖRIGE VERFAHREN
SYSTÈMES DE PROTECTION D'ENTRÉE INTERCHANGEABLES POUR ADMISSIONS D'AIR DE MOTEURS D'AVION ET PROCÉDÉS ASSOCIÉS

(30) Priority: 15.03.2013 US 201313841411
(43) Date of publication of application: 20.01.2016
(73) Proprietor: Donaldson Company, Inc., Minneapolis, MN 55440-1299 (US)
(72) Inventor: BOYCE, Mark, Edward, Chesterfield, MO 63005 (US)
(74) Representative: Sutto, Luca
(86) International application number: PCT/US2014/028351
(87) International publication number: WO 2014/200590

(56) References cited:
- WO-A1-2010/077241
- WO-A2-2008/130725
- GB-A- 1 201 096
- US-A- 3 421 296
- US-A- 3 449 891
- US-A1- 2008 135 689
- US-B1- 6 349 899

## Description

### CROSS-REFERENCE TO RELATED APPLICATION

This application claims priority to U.S. Non-Provisional Patent Application No. 13/841,411 filed 15 March 2013.

### FIELD

The field of this disclosure relates generally to air inlet protection systems for aircraft and related methods, and more particularly, to inlet protection systems for aircraft engine air intakes and to related methods.

### BACKGROUND

An engine for aircraft propulsion requires intake air that is free from contaminants to provide for efficient combustion and avoid damage to internal engine components. Some known compressors and turbines are designed with small clearances between moving parts that maximize efficiency, but which also increase vulnerability to damage of engine parts from small foreign particles. Contaminants in intake air, even in a small amount or of a very small size, may cause premature wear on engine components, increase maintenance costs, and degrade operational performance and reliability. Aircraft are exposed to contaminants when operating at low altitudes where air is frequently contaminated with material from the ground, such as sand and dust. This problem may be aggravated for helicopters due to rotor downwash and prolonged low-altitude operation. Systems which remove foreign particles from intake flow have been developed to protect the engine from damage. For example, an inlet protection device filter may be positioned across the intake of the engine. However, such systems are not completely satisfactory. Further, it is known from US 3,421,296 an air particle separator for an aircraft having a main filter panel and a mobile bypass filter panel.

This section is intended to introduce various aspects of art that may be related to various aspects of the present disclosure, which are described and/or claimed below. This discussion should be helpful in providing background information to facilitate a better understanding of the various aspects of the present invention. These statements are to be read in this light, and not as admissions of prior art.

### SUMMARY

The invention concerns inlet protection systems according to any one of the appended claims.

A first aspect is an inlet protection system for filtering air prior to entry into an air intake of an engine of an aircraft. The inlet protection system includes a removable panel connected to a bleed air supply. The removable panel has an outer skin and a plurality of particle separators. The outer skin is aligned with an outer contour of the aircraft. The plurality of particle separators are attached to the outer skin and disposed to provide filtered air to the air intake. The outer skin has an opening disposed along a portion of it to discharge filtered particles from within the removable panel directly outward therefrom. The bleed air supply is connected with the engine to supply bleed air to the opening in the removable panel to aid in discharge of filtered particles.

Another aspect is a removable inlet protection system for filtering air prior to entry into an air intake of an engine of an aircraft. The inlet protection system includes a first removable barrier filter panel and a second removable particle separator panel. The first removable barrier filter panel is adapted to be mounted on the aircraft adjacent the air intake and includes barrier filter media. The first panel is adapted to be mounted conformal to the contour of the aircraft and having an outer periphery. The second removable particle separator panel is adapted to be mounted on the aircraft adjacent the air intake and includes particle separators. The second panel is adapted to be mounted conformal to the contour of the aircraft and has an outer periphery that is substantially the same as the outer periphery of the first panel so as to be interchangeable with the first panel.

Another aspect is a barrier filter system that includes a first filter panel, second movable bypass filter panel, and a torque tube supporting at least one edge of the bypass filter panel.

Various refinements exist of the features noted in relation to the above-mentioned aspects. Further features may also be incorporated in the above-mentioned aspects as well. These refinements and additional features may exist individually or in any combination. For instance, various features discussed below in relation to any of the illustrated embodiments may be incorporated into any of the above-described aspects, alone or in any combination.

### BRIEF DESCRIPTION OF THE DRAWINGS

The drawings are not to scale and certain features may be exaggerated for ease of illustration.
Fig. 1 is a perspective view of an aircraft according to one embodiment of the present disclosure;
Fig. 2 is a perspective view of an aircraft having a particle separator device according to one embodiment of the present disclosure;
Fig. 3 is an outer view of the particle separator device of Fig. 2;
Fig. 4 is an inner view of the particle separator device Fig. 3;
Fig. 5 is a bottom view of the particle separator device of Figs. 3 and 4;
Fig. 6 is a front view of the particle separator device of Figs. 3-5;
Fig. 7 is a rear view of the particle separator device of Figs. 3-6;
Fig. 8 is an outer perspective view of a discharge duct for use with the particle separation device of Fig. 2;
Fig. 9 is an inner perspective view of the discharge duct of Fig. 8;
Fig. 10 is a rear perspective view of the discharge duct of Figs. 8 and 9;
Fig. 11 is a perspective view of the aircraft having a barrier filter device instead of the particle separator;
Fig. 12 is an outer view of the barrier filter device of Fig. 11;
Fig. 13 is a front view of the barrier filter device of Figs. 11 and 12;
Fig. 14 is a rear view of the barrier filter device of Figs. 11-13;
Fig. 15 is a rear perspective view of the inside of the barrier filter device of Figs. 11-14;
Fig. 16 is a forward perspective view of the inside of the barrier filter device of Figs. 11-15;

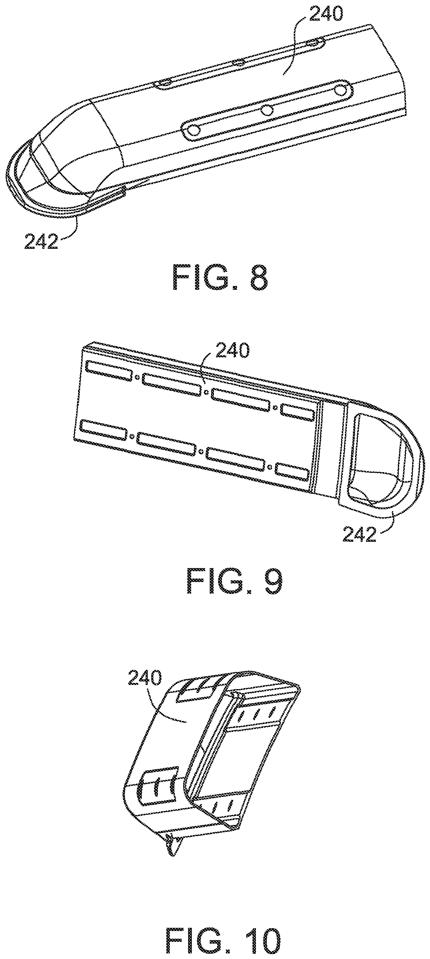

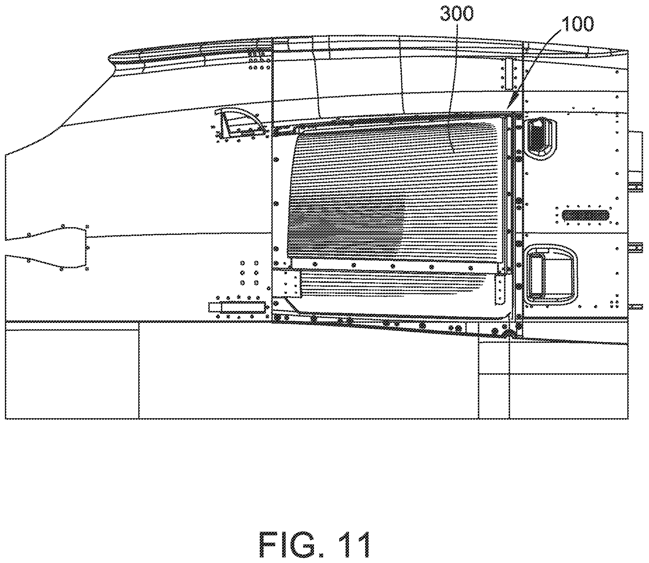

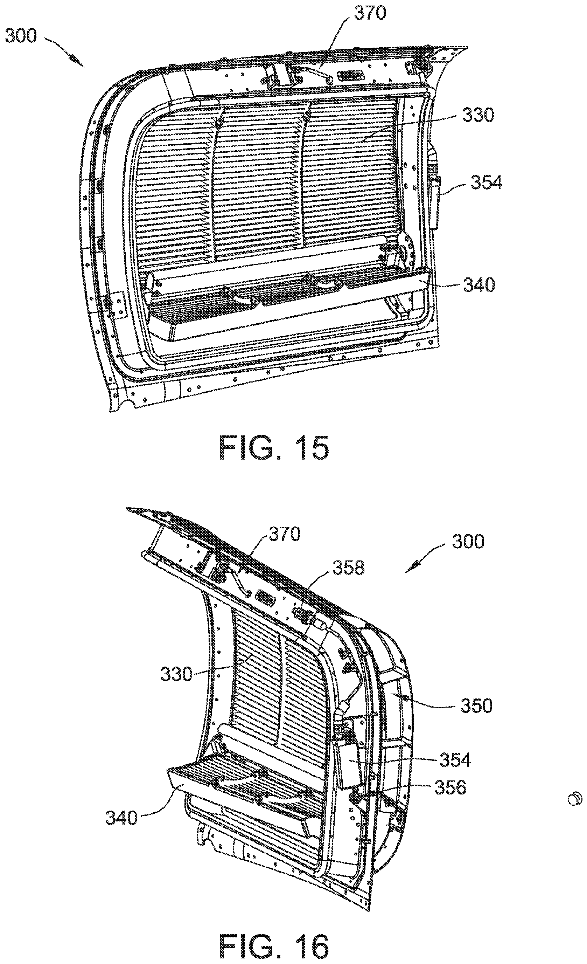

Fig. 16 is a front view of the barrier filter device of Figs. 10 and 11;

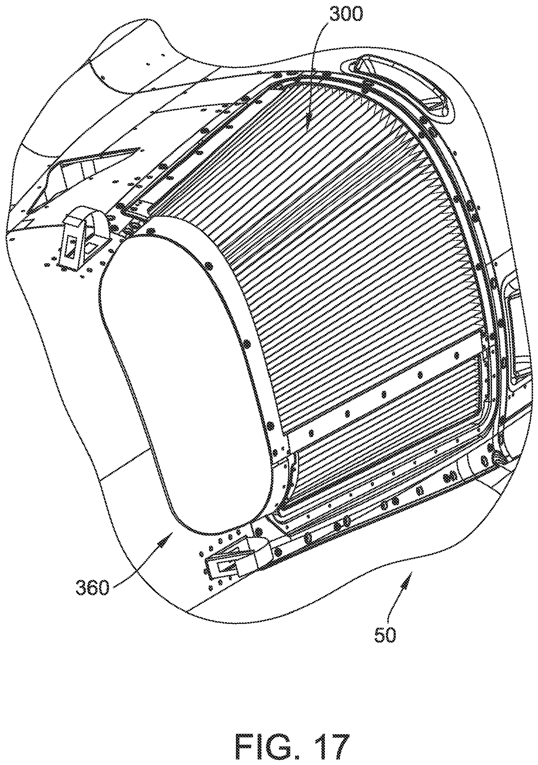

Fig. 17 is a front view of the barrier filter device of Fig. 11 with a fairing;

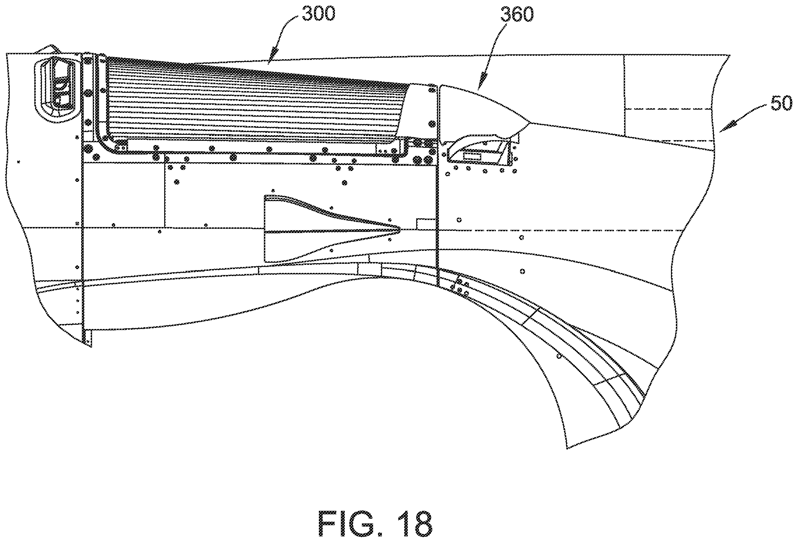

Fig. 18 is a top view of the barrier filter device of Fig. 17;

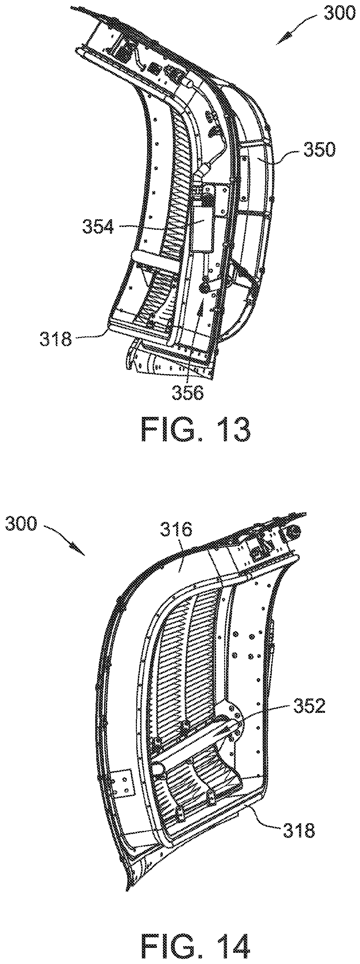

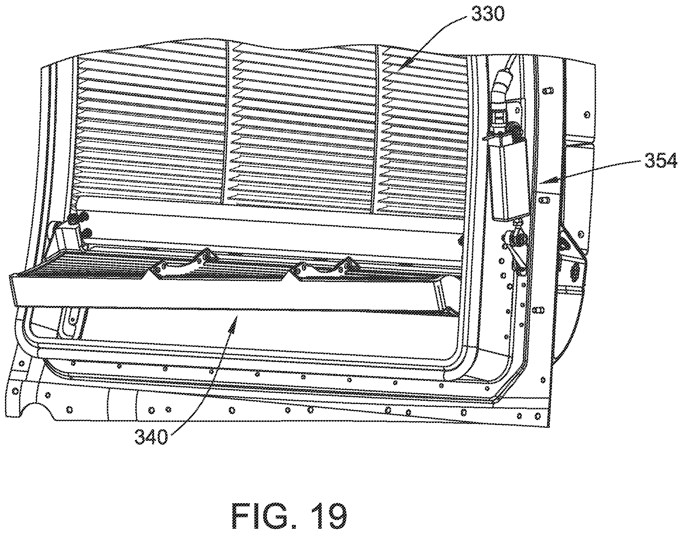

Fig. 19 is an inner view of the barrier filter device of Figs. 11-16 in an open position;

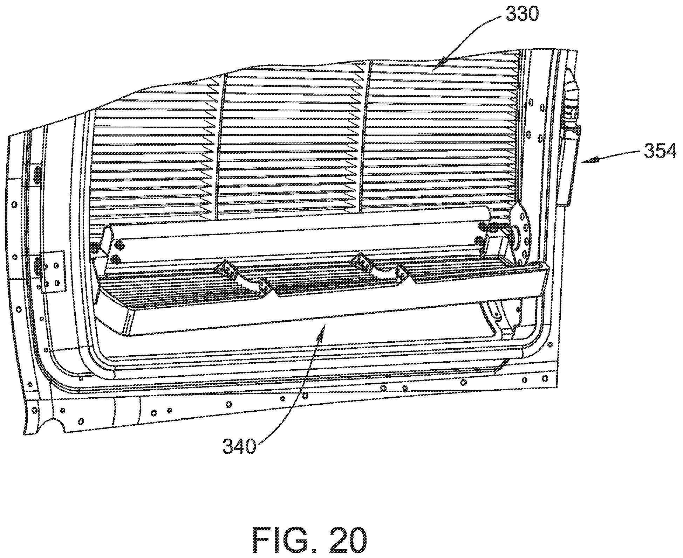

Fig. 20 is an inner view of the barrier filter device of Fig. 18;

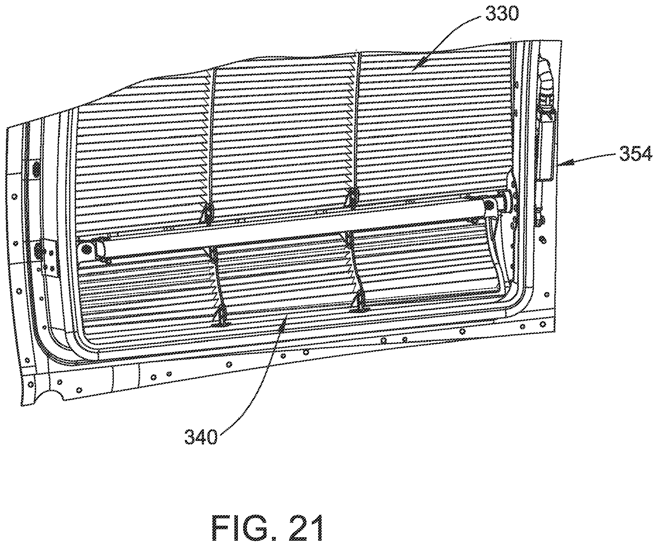

Fig. 21 is an inner view of the barrier filter device of Figs. 11-16 in a closed position;

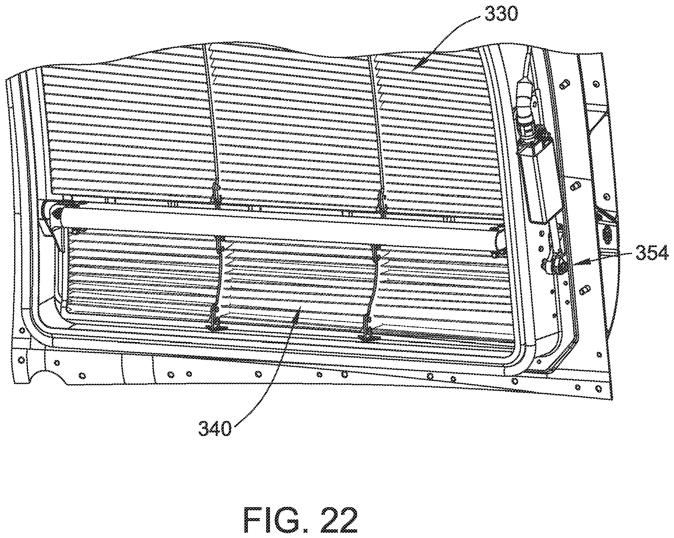

Fig. 22 is an inner view of the barrier filter device of Fig. 21;

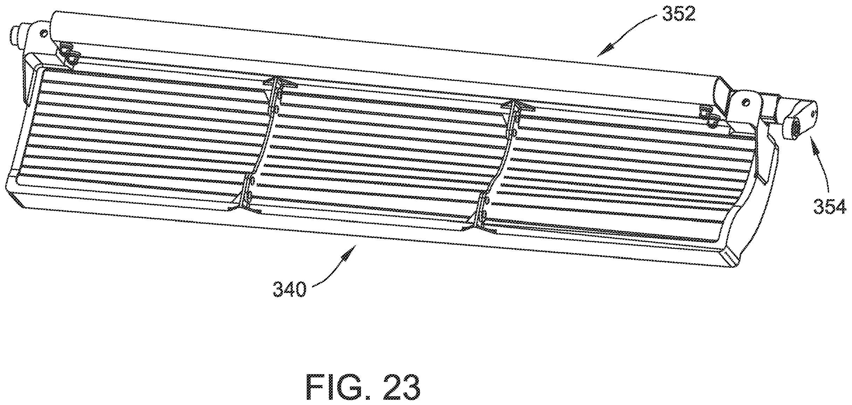

Fig. 23 is an inner view a bypass filter of the barrier filter device of Fig. 11 with a torque bar and actuation arm;

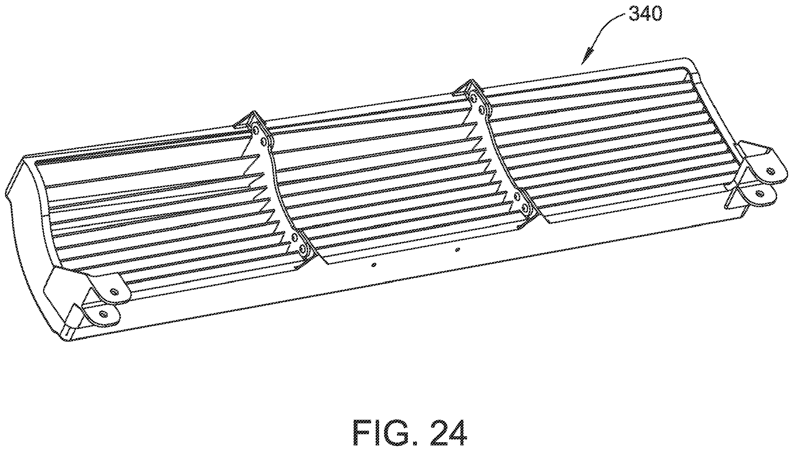

Fig. 24 is an inner view the bypass filter of the barrier filter device of Fig. 11.

### DETAILED DESCRIPTION

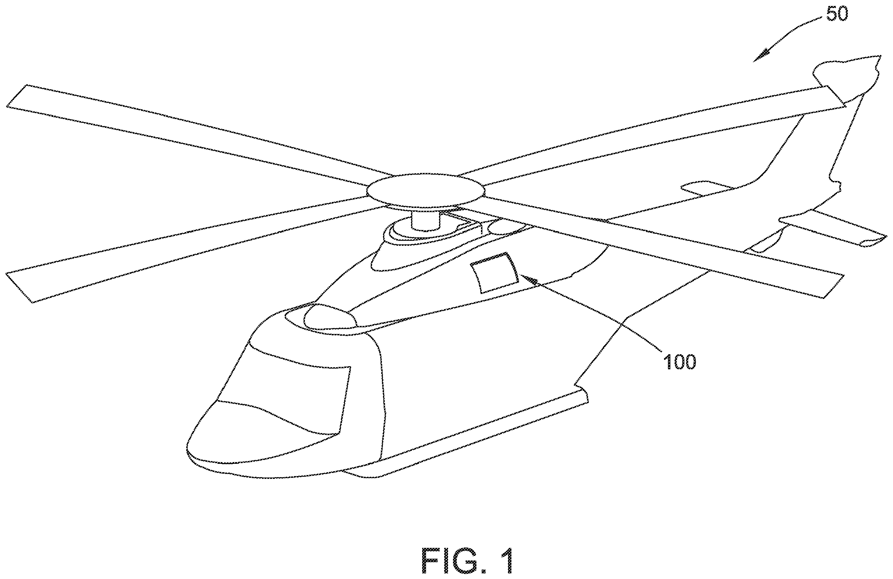

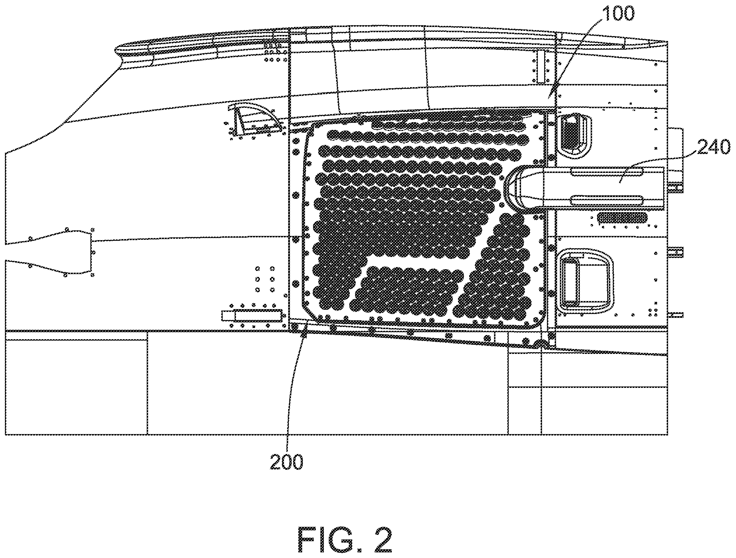

With reference to Figure 1, an aircraft is shown and generally indicated at 50. The aircraft includes an inlet protection system 100. The inlet protection system 100 generally includes a removably attached particle separator panel 200, as shown in Figure 2, and interchangeably, a barrier filter panel 300, as shown in Figure 10.

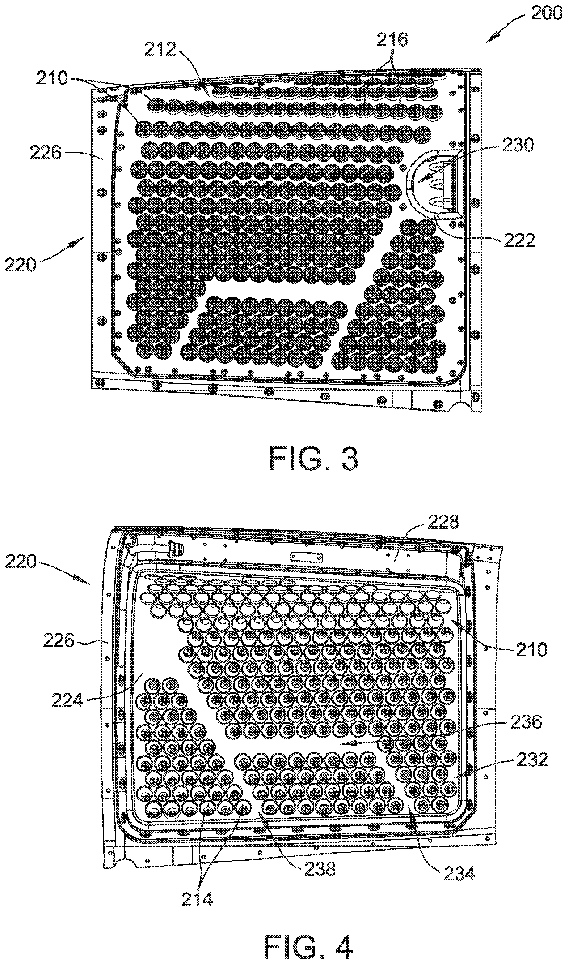

With reference to Figures 2 and 3, the particle separator panel 200 is adapted to be mounted on the aircraft adjacent the air intake and includes a plurality of particle separators 210. At least a portion of the particle separators 210 are mounted in a body 220 and are aligned in rows extending from front to back along the body. In this embodiment, the body 220 is made of composite material and generally curved front to back and top to bottom. A D-shaped discharge opening 222 is located along an aft section of the body 220 at a height location above a vertically disposed midpoint of the body.

The body includes an inner skin 224, an outer skin 226, and a perimeter skin 228 connecting the inner and outer skins. A cavity 230 is defined within the body 220, between the inner skin 224, the outer skin 226, and the perimeter skin 228. The inner and outer skins 224, 226 include a plurality of holes 232 extending therethrough. Each of the plurality of holes 232 is sized and shaped to receive at least a portion of a particle separator 210 therein.

Each particle separator 210 of this embodiment generally includes an outer part 212 and an inner part 214. The outer part 212 includes a cylindrical tube covered with screen 216 to prevent entry of larger debris. The inner part 214 includes a conical shaped tube that is received in the outer part 212. Each particle separator is configured to separate particles from air passing therethrough, so as to allow debris particles to be evacuated from within the particle separator 210. The evacuated particles are expelled from the particle separator 210 into the cavity 230 between the inner skin 224 and outer skin 226.

The efficiency of the particle separator 210 will vary based on the type of separator used and the operating conditions, but may be at least 90%, at least 91%, at least 92% or in some embodiments between 93 and 95%.

Each particle separator 210 is spaced from an adjacent particle separator to create a gap therebetween. The gap between particle separators 210 allows the evacuated debris to exit from the particle separator 210 between the outer part 212 and the inner part 214 and be transported through the cavity 230.

The particle separators 210 are arranged to form several channels that extend through the cavity 230 in the body 220. A first channel 234 extends upward at a rearward angle to approximately one-quarter the overall height of the body 220. A second channel 236 extends from the top rear end of the first channel 234 rearward to connect with a third channel 238. The third channel 238 extends upward in a rearward direction to meet the discharge opening 222 in the outer skin 226. In some embodiments, more or less channels arranged in different configurations may be used. The expelled particles pass between the tubes and/or around a perimeter of the cavity 230 and/or through one or more of the channels 234, 236, and 238, and out of the discharge opening 222.

In some embodiments, the particle separator panel is devoid of these channels. In these embodiments, the channels are omitted, and separators may be disposed in their place. The expelled particles pass between the tubes and/or around a perimeter of the cavity 230, and out of the discharge opening 222.

A relatively small amount of scavenge air is also expelled from between the outer part 212 and the inner part 214 into the cavity 230 that creates a low pressure area in the cavity 230. The scavenge air carries the particles from the particle separators 210, through the cavity 230, and out of the discharge opening 222.

With additional reference to Figures 1 and 7-9, the particle separator panel 200 also includes a discharge duct 240 extending outward and rearward from the discharge opening 222.

A seal 242 is located between the discharge duct 240 and the body 220 to prevent ambient air from entering into the discharge opening 222 or the discharge duct and to facilitate particle expulsion therethrough. The seal 242 facilitates a substantially airtight seal between the duct and panel. The discharge duct 240 opens to the rear of the aircraft and may also facilitate a differential pressure between the ambient air and the air being expelled from the discharge duct in forward flight. The difference in pressure aids in the expulsion of particles from within the discharge duct 240.

In this embodiment, the discharge duct 240 is attached to an adjacent access panel that is adapted to be moved outward from the aircraft. Movement of the adjacent access panel to an open or removed position, e.g., when the access panel is swung open, causes the duct to move with the access panel to a position away from the particle separator panel. When moved back into position, the seal 242 operates to form an airtight seal against with the separator panel.

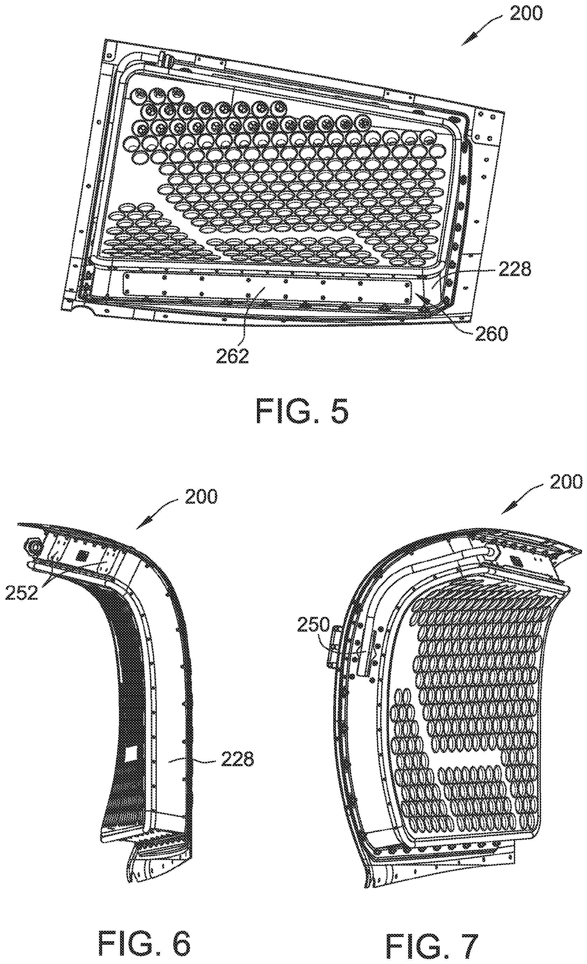

With reference to Figure 6, the particle separator panel 200 includes an ejector 250 connected with a rear portion of the perimeter skin 228. The ejector 250 extends into the cavity 230, out through the discharge opening 222, and rearward through the discharge duct 240. The ejector 250 is connected with a bleed airline (not shown) within the aircraft for redirecting a portion of the air from the engine compressor into the discharge duct 240 to increase the velocity of air passing therethrough. In the alternative, a blower or fan may be used to increase the velocity of air passing through the discharge duct.

With reference to Figure 4, an inspection port 260 is located along a lower section of the lower perimeter skin 228. The inspection port 260 provides access to the cavity 230 from the bottom of the body. The inspection port 260 is covered by an inspection plate or panel 262 to prevent air from exiting through the inspection port. Removal of the plate 262 allows access to the inspection port 260 and removal of trapped debris located within the body. The inspection port 260 reduces maintenance time needed to inspect and maintain the particle separator panel.

With reference to Figures 5 and 6, an upper portion of the perimeter skin 228 is attached to the aircraft by a pair of hinges 252. The hinges 252 allow the particle separator panel 200 to be moved from a first position substantially matching the outer contour of the aircraft to a second position that is substantially outward from the aircraft. The inspection plate 262 is exposed when the particle separator panel 200 is in the second position to allow the inspection plate 262 to be removed and the cavity 230 of the particle separator panel to be cleared without removal of the entire particle separator panel from the aircraft. An advantage of the particle separator panel 200 being movable from a first position to a second position is a reduction in maintenance time and the number of maintenance personnel needed to inspect and maintain the particle separator panel.

In some embodiments, the particle separator panel is not attached to the aircraft by hinges. In these embodiments, the particle separator panel is fastened to the aircraft and removal of the fasteners allows the particle separator panel to be removed from the aircraft.

In some embodiments, an access door (not shown) may be attached to the inlet protection system through hinges. The access door may be opened to connect and disconnect airlines and electrical connectors from the inlet protection system. In these embodiments, removal of the inlet protection system also removes the access door from the aircraft.

With further reference to Figures 10-11, the barrier filter panel 300 includes a frame 310, an upper filter 330, a bypass filter 340, and optionally, bypass doors 350. The frame 310 includes an upper portion containing the upper filter 330 and a lower portion or bypass filter frame containing the bypass filter 340. The barrier filter panel 300 is substantially aligned with an outer surface or contour of the aircraft along a portion of the barrier filter panel, but may be spaced from the outer surface of the aircraft along a portion of the barrier filter panel. This may be accomplished by a suitable fairing 360, e.g., along the forward edge of the inlet protection panel that covers the area adjacent the bypass doors 350, as shown in Figures 17 and 18. In some embodiments, a fairing may be installed along any portion of barrier filter panel that does not match the contour profile of the aircraft.

The frame 310 includes a first skin 312 that is substantially aligned with the outer contour of the aircraft. The first skin 312 includes a plurality of holes for fasteners distributed about the perimeter for attaching the barrier filter panel 300 to the aircraft. The plurality of holes form a pattern that is substantially in alignment with a fastening pattern in the particle separator panel 200 to allow interchangeability of the particle separator panel with the barrier filter panel 300.

The frame 310 also includes a second or outer skin 314 for containment of both the upper filter 330 and bypass filter 340. The upper filter 330 and the bypass filter 340 contain a filter media, which may be wet or dry media. In one embodiment, the filter media is capable of achieving high particle removal efficiencies. In this embodiment, the media has a face velocity range of between 15 to 50 feet per second (fps). The pressure drop across the media will range from .6 inches of water at 15 fps to 5.6 inches of water at 50 fps. The filter media is suitably made of a lightweight material that will also be resistant to damage by water and other liquids it may encounter in operation. Suitable filter media includes paper, woven cotton, polyester or felt. The media may include a grid fabric having a plurality of layers. The filter media may be strengthened by a stainless steel screen (not shown) which encloses all or a portion of the filter media. To improve the filter efficiency for finer particles, the filter media may be impregnated with oil that not only improves particle removal, but also helps resist moisture absorption by the filter media rendering it waterproof. The media of this embodiment is also pleated. Various other configurations, including other filter media and unpleated media are contemplated within the scope of the disclosure.

The second skin 314 matches the contour of the aircraft along a forward portion and is spaced outward from the contour of the aircraft along the rear portion. The second skin is bowed from top to bottom along the length of the rear portion to substantially match the contour of the aircraft along a portion of the perimeter of the barrier filter panel 300. The second skin 314 is attached to the first skin 312 about a portion of the perimeter thereof.

Optional bypass doors 350 may extend for example along the rear portion of the frame 310 between the first skin 312 and the bow formed by the second skin 314. The bypass doors 350 are movable from a first or closed position that inhibits air from flowing through a passage along the rear of the body and into the aircraft engine inlet to a second or open position that allows air to flow through the passage. The bypass doors 350 may be positioned to allow large debris to be directed along the second skin 314, across the filters 330 and 340, and outward, away from the bypass doors. The bypass doors 350 may be connected with the bypass filter 314 through a torque tube 352. In other embodiments, the barrier filter panel is devoid of any bypass doors.

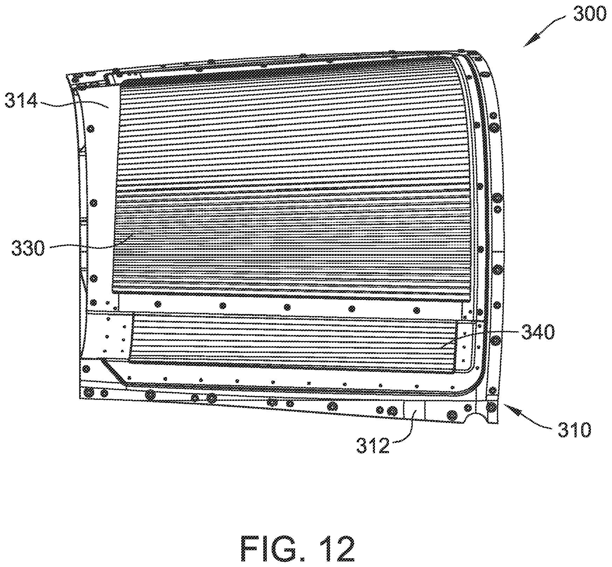

With reference to Figures 12-15, the torque tube 352 is connected with an actuating mechanism 354 for moving or rotating the torque tube. In other embodiments, the bypass filter and the bypass doors may be moved by a motion other than rotation.

The actuating mechanism 354 and the torque tube 352 are connected through a link system 356. The link system 356 converts linear movement of the actuating mechanism 354 into rotational movement of the torque tube 352. In some embodiments, a bellcrank or gear may be used to limit movement of the torque tube, upper filter, and/or the bypass doors.

The actuating mechanism 354 is connected with the aircraft through an electrical connector 358 having a male and female fitting. The electrical connector 358 provides a quick disconnect between the aircraft and the barrier filter panel 300. The aircraft portion of the electrical connector is positioned to not interfere with attachment of either the barrier filter panel 300 or the particle separator panel 200 to the aircraft.

With reference to Figures 19-24, the bypass filter 340 is rotationally connected with the torque tube 352 to provide rotational movement of the bypass filter 340 about the length of the torque tube in rotational relation to the torque tube. Rotational movement of the bypass filter 340 changes the position of the bypass filter from the first or closed position which prevents unfiltered air from passing around the filter, to a second or open position allowing unfiltered air to enter the engine inlet around the filter (bypass mode). Rotation of the bypass filter from the first position to the second position substantially reduces air flowing through the bypass filter 340. The reduction of air flowing through the bypass filter 340 is accompanied by an increase of air flowing around the bypass filter and into the engine inlet.

The torque tube 352 provides torsional rigidity to the bypass filter 340 when the bypass filter is in an open position. The torque tube 352 is an aluminum extrusion, but may be of other materials. In some embodiments, the torque tube is machined from a single piece of material. The torque tube 352 supports at least one edge of the bypass filter 340. With specific reference to Figures 23 and 24, the bypass filter 340 is connected to the torque tube 352 through fasteners at each end of the bypass filter 340. The bypass filter 340 extend around two sides of the torque tube 352 to provide paths for counteracting forces to be transferred between the bypass filter and torque tube. The torque tube 352 provides a rotation force to be transferred down the length of the bypass filter 340. This distribution of the rotation force along the length of the bypass filter 340 prevents one edge of the bypass filter from being out of alignment with a directly opposite edge.

As shown, a solid frame member is disposed between the first filter panel and the bypass filter panel and intake airflow is limited adjacent the frame member. The torque tube is disposed along the frame member to minimize any impact of the torque tube on intake airflow. The lower portion of the frame includes at least one clevis for receiving the torque tube.

With continued reference to Figures 12-15, the barrier filter panel 300 includes a pressure sensor 370 to measure differential air pressure across the inside of the barrier filter panel. The pressure sensor 370 may be connected with the aircraft through the same electrical connector 358 as the actuating mechanism 354. A single electrical connector allows for quick disconnect and reduces the steps required to install and uninstall the barrier filter panels. In some embodiments, the actuating mechanism 354 and the pressure sensor 370 are connected with the aircraft through separate electrical connectors.

The frame 310 includes an interior wall 316 spaced from the perimeter of the first skin 312 and extending inward therefrom. The interior wall 316 is connected with the first skin 312. An interior-most portion of the interior wall has a seal 318 extending along the perimeter thereof. The seal 318 forms an airtight connection between the barrier filter panel 300 and the aircraft. Air is inhibited from entering into the engine inlet duct except through the upper filter 330, the bypass filter 340, and/or bypass doors 350.

The pressure sensor 370 is connected with a warning light or display (not shown) located within the cockpit. The warning light or display conveys operational information of the barrier filter panel 300 to the operator of the aircraft, such as the pressure differential. The illuminated warning light or display may indicate a decreased flow of air through the barrier filter panel 300 and into the engine air inlet.

A bypass switch (not shown) located within the cockpit of the aircraft allows an operator to manually control the positions of the bypass filter 340 and/or the bypass doors 350. The operator may activate an actuation mechanism 354 through manual activation of the bypass switch to allow air to bypass the barrier filters 330 and 340 and to enter the engine inlet duct through the bypass filter 340 and/or bypass doors 350. The actuation system may be contained within the first removable panel for ease of installation. Alternatively in other embodiments, the system may be configured to, under predetermined conditions, automatically activate the bypass switch and open the bypass filter and/or bypass doors.

Operation of the aircraft in dirty environments may clog the barrier filters 330 and 340 and require the barrier filters to be bypassed. The difference in airflow through the barrier filters 330 and 340 creates a pressure difference measured by the pressure sensor 370, which is connected to the display to advise the operators of the operational condition. The crew may in turn activate the actuation mechanism 354 to cause the bypass filter 340 and/or the bypass doors 350 to be moved into the second or open position.

Both the particle separator panel 200 and the barrier filter panel 300 are adapted to be mounted conformal to the contour of the aircraft, having substantially the same outer periphery, and include a common fastening pattern located about their respective outer periphery. The common fastening pattern facilitates an easy interchange of one panel with the other. This interchangeability allows different filter panels, e.g., a particle separator panel 200 and barrier filter panel 300, to be used on the same aircraft without extensive, costly retrofitting. Advantages of using the interchangeable panels include reduced maintenance costs, reduced labor associated with maintenance, and increased overall operational efficiency of the engine.

When introducing elements of the present invention or the embodiment(s) thereof, the articles "a", "an", "the" and "said" are intended to mean that there are one or more of the elements. The terms "comprising", "including" and "having" are intended to be inclusive and mean that there may be additional elements other than the listed elements.

As various changes could be made in the above constructions without departing from the scope of the invention, it is intended that all matter contained in the above description and shown in the accompanying drawings shall be interpreted as illustrative and not in a limiting sense.

## Claims

1. An inlet protection system for filtering air prior to entry into an air intake of an engine of an aircraft, the inlet protection system comprising:
a barrier filter panel (300) adapted to be mounted on the aircraft adjacent the air intake, the barrier filter panel (300) including:
a first filter panel (330) having barrier filter media;
a bypass filter panel (340) connected with the first filter panel (330) and movable with respect to the first filter panel (330), the bypass filter panel (340) having a bypass filter frame; **characterized in that** the inlet protection system comprises:
a torque tube (352) supporting at least one edge of the bypass filter panel (340), the torque tube (352) being rotatably connected with the bypass filter panel (340) and providing torsional rigidity to the bypass filter panel when the bypass filter panel is in an open position.

2. The system of claim 1, wherein the bypass filter frame is machined from a single piece of rigid material.

3. The system of claim 1 or 2, wherein the bypass filter frame includes at least one clevis for receiving the torque tube (352).

4. The system of any one of claims 1 to 3, further comprising a frame member between the first filter panel (330) and the bypass filter panel (340) and wherein airflow is limited adjacent the frame member, wherein the torque tube (352) is disposed along the frame member to minimize an impact of the torque tube (352) on intake airflow.

5. The system of claim 1, wherein frame (310) of barrier filter panel (300) includes a first skin (312) that is substantially aligned with the outer contour of the aircraft.

6. The system of claim 5, wherein the frame (310) includes a second skin (314) for containment of both the first filter panel (330) and the bypass filter (340).

7. The system of claim 6, wherein the second skin (314) is attached to the first skin (312) about a portion of the perimeter thereof.

8. The system of claim 1 comprising bypass doors (350) movable from a closed position that inhibits air from flowing through a passage and into the aircraft engine inlet to an open position that allows air to flow through the passage.

9. The system of claim 1 comprising an actuating mechanism (354) connected with the torque tube (352) through a link system (356), wherein the link system (356) is configured to convert linear movement of the actuating mechanism (354) into rotational movement of the torque tube (352).

10. The system of claim 1, wherein rotational movement of the bypass filter panel (340) changes the position of the bypass filter panel (340) from a closed position which prevents unfiltered air from passing around the bypass filter panel (340) to the open position allowing unfiltered air to enter the engine intake air intake of an engine of an aircraft.

11. The system of claim 10, wherein rotation of the bypass filter panel (340) from the closed position to the open position substantially reduces air flowing through the bypass filter panel (340).

12. The system of claim 1, wherein the torque tube (352) provides a rotation force along a length of the bypass filter panel (340).

13. The system of claim 12 wherein the bypass filter panel (340) extends around two sides of the torque tube (352) and is connected to the torque tube (352) through fasteners at each end of the bypass filter panel (340).

## Patentansprüche

1. Einlassschutzsystem zum Filtern von Luft vor dem Eintritt in einen Lufteinlass eines Luftfahrzeug-Triebwerks, wobei das Einlassschutzsystem aufweist:
eine Barrierefilterplatte (300), die dazu ausgelegt ist, an dem Luftfahrzeug benachbart dem Lufteinlass angebracht zu werden, wobei die Barrierefilterplatte (300) enthält:
eine erste Filterplatte (330), die Barrierefiltermittel aufweist;
eine Bypassfilterplatte (340), die mit der ersten Filterplatte (330) verbunden und in Bezug auf die erste Filterplatte (330) bewegbar ist,
wobei die Bypassfilterplatte (340) einen Bypassfilterrahmen aufweist,
**dadurch gekennzeichnet, dass** das Einlassschutzsystem aufweist:
ein Verdrehrohr (352), das zumindest einen Rand der Bypassfilterplatte (340) trägt, wobei das Verdrehrohr (352) mit der Bypassfilterplatte (340) drehbar verbunden ist und der Bypassfilterplatte eine Torsionssteifigkeit verleiht, wenn die Bypassfilterplatte in einer offenen Stellung ist.

2. Das System von Anspruch 1, wobei der Bypassfilterrahmen aus einem einzigen Stück aus starrem Material spanend bearbeitet ist.

3. Das System von Anspruch 1 oder 2, wobei der Bypassfilterrahmen zumindest eine Öse zur Aufnahme des Verdrehrohrs (352) aufweist.

4. Das System von einem der Ansprüche 1 bis 3, das ferner ein Rahmenelement zwischen der ersten Filterplatte (330) und der Bypassfilterplatte (340) aufweist, und wobei die Luftströmung benachbart dem Rahmenelement beschränkt ist, wobei das Verdrehrohr (352) entlang dem Rahmenelement angeordnet ist, um einen Einfluss des Verdrehrohrs (352) auf den Einlassluftfluss zu minimieren.

5. Das System von Anspruch 1, wobei der Rahmen (310) der Barrierefilterplatte (300) eine erste Haut (312) aufweist, die mit der Außenkontur des Luftfahrzeugs im Wesentlichen fluchtet.

6. Das System von Anspruch 5, wobei der Rahmen (310) eine zweite Haut (314) zur Aufnahme von sowohl der ersten Filterplatte (330) als auch des Bypassfilters (340) enthält.

7. Das System von Anspruch 6, wobei die zweite Haut (314) an der ersten Haut (312) um einen Abschnitt ihres Umfangs angebracht ist.

8. Das System von Anspruch 1, das Bypasstüren (350) aufweist, die von einer geschlossenen Stellung, die den Luftfluss durch einen Kanal und in den Luftfahrzeug-Triebwerkseinlass behindert, zu einer offenen Stellung, die den Luftfluss durch den Kanal erlaubt, bewegbar sind.

9. Das System von Anspruch 1, das einen Betätigungsmechanismus (354) aufweist, der mit dem Verdrehrohr (352) durch ein Koppelsystem (356) verbunden ist, wobei das Koppelsystem (356) konfiguriert ist, um eine lineare Bewegung des Betätigungsmechanismus (354) in eine Drehbewegung des Verdrehrohrs (352) umzuwandeln.

10. Das System von Anspruch 1, wobei eine Drehbewegung der Bypassfilterplatte (340) die Stellung der Bypassfilterplatte (340) von einer geschlossenen Stellung, die verhindert, dass ungefilterte Luft um die Bypassfilterplatte (340) herum fließt, zu der offenen Stellung, die erlaubt, dass ungefilterte Luft in den Triebwerkslufteinlass eines Luftfahrzeug-Triebwerks erlaubt, verändert.

11. Das System von Anspruch 10, wobei eine Drehung der Bypassfilterplatte (340) von der geschlossenen Stellung zu der offenen Stellung den Luftfluss durch die Bypassfilterplatte (340) wesentlich reduziert.

12. Das System von Anspruch 1, wobei das Verdrehrohr (352) für eine Drehkraft entlang einer Länge der Bypassfilterplatte (340) sorgt.

13. Das System von Anspruch 12, wobei sich die Bypassfilterplatte (340) um zwei Seiten des Verdrehrohrs (352) herum erstreckt und mit dem Verdrehrohr (352) durch Befestigungselemente an jedem Ende der Bypassfilterplatte (340) verbunden ist.

## Revendications

1. Système de protection d'orifice d'entrée destiné à la filtration de l'air avant l'entrée dans une prise d'air d'un moteur d'un aéronef, le système de protection d'orifice d'entrée comprenant :
un panneau filtre formant barrière (300) adapté pour être monté sur l'aéronef de manière adjacente à la prise d'air, le panneau filtre formant barrière (300) comprenant :
un premier panneau filtre (330) présentant un milieu filtre formant barrière ;
un panneau filtre de contournement (340) raccordé au premier panneau filtre (330) et mobile par rapport au premier panneau filtre (330), le panneau filtre de contournement (340) présentant un cadre filtre de contournement ; **caractérisé en ce que** le système de protection d'orifice d'entrée comprend :
un tube de torsion (352) soutenant au moins un bord du panneau filtre de contournement (340), le tube de torsion (352) étant connecté de manière à pouvoir tourner au panneau filtre de contournement (340) et fournissant une rigidité de torsion au panneau filtre de contournement lorsque le panneau filtre de contournement se trouve en une position ouverte.

2. Système selon la revendication 1, dans lequel le cadre filtre de contournement est usiné à partir d'une pièce unique de matériau rigide.

3. Système selon la revendication 1 ou 2, dans lequel le cadre filtre de contournement comprend au moins un oeillet de suspension pour recevoir le tube de torsion (352).

4. Système selon l'une quelconque des revendications 1 à 3, comprenant en outre un élément formant cadre entre le premier panneau filtre (330) et le panneau filtre de contournement (340) et où le flux d'air est limité adjacent à l'élément formant cadre, où le tube de torsion (352) est disposé le long de l'élément formant cadre pour réduire un impact du tube de torsion (352) sur un écoulement d'air de prise.

5. Système selon la revendication 1, dans lequel cadre (310) du panneau filtre formant barrière (300) comprend une première peau (312) qui est sensiblement alignée sur le contour externe de l'aéronef.

6. Système selon la revendication 5, dans lequel le cadre (310) comprend une seconde peau (314) pour le confinement à la fois du premier panneau filtre (330) et du filtre de contournement (340).

7. Système selon la revendication 6, dans lequel la seconde peau (314) est fixée à la première peau (312) autour d'une partie de son périmètre.

8. Système selon la revendication 1 comprenant des portes de contournement (350) mobiles depuis une position fermée qui inhibe l'écoulement de l'air à travers un passage et dans l'orifice d'entrée du moteur d'aéronef vers une position ouverte qui permet à l'air de s'écouler à travers le passage.

9. Système selon la revendication 1 comprenant un mécanisme d'actionnement (354) raccordé au tube de torsion (352) à travers un système de liaison (356), où le système de liaison (356) est configuré pour convertir le mouvement linéaire du mécanisme d'actionnement (354) en un mouvement de rotation du tube de torsion (352).

10. Système selon la revendication 1, dans lequel le mouvement de rotation du panneau filtre de contournement (340) change la position du panneau filtre de contournement (340) depuis une position fermée qui empêche l'air non filtré de passer autour du panneau filtre de contournement (340) vers la position ouverte permettant à l'air non filtré de pénétrer dans la prise d'air de prise d'air du moteur d'un moteur d'un aéronef.

11. Système selon la revendication 10, dans lequel la rotation du panneau filtre de contournement (340) à partir de la position fermée vers la position ouverte réduit sensiblement l'écoulement d'air à travers le panneau filtre de contournement (340).

12. Système selon la revendication 1, dans lequel le tube de torsion (352) fournit une force de rotation le long d'une longueur du panneau filtre de contournement (340).

13. Système selon la revendication 12 dans lequel le panneau filtre de contournement (340) s'étend autour de deux côtés du tube de torsion (352) et est raccordé au tube de torsion (352) à travers des attaches au niveau de chaque extrémité du panneau filtre de contournement (340).
